# EUROPÄISCHE PATENTSCHRIFT

(11) **EP 3 292 317 B1**
(45) Veröffentlichungstag und Bekanntmachung des Hinweises auf die Patenterteilung: **27.11.2019**
(21) Anmeldenummer: 16722787.5
(22) Anmeldetag: 06.05.2016
(51) Int. Cl.: F16D 55/2265, F16D 55/227

(54) **SCHEIBENBREMSE EINES NUTZFAHRZEUGS**
UTILITY VEHICLE DISK BRAKE
FREIN À DISQUE D'UN VÉHICULE UTILITAIRE

(30) Priorität: 07.05.2015 DE 102015107128
(43) Veröffentlichungstag der Anmeldung: 14.03.2018
(73) Patentinhaber: KNORR-BREMSE Systeme für Nutzfahrzeuge GmbH, 80809 München (DE)
(72) Erfinder: FISCHL, Tobias, 80336 München (DE)
(86) Internationale Anmeldenummer: PCT/EP2016/000747
(87) Internationale Veröffentlichungsnummer: WO 2016/177474

(56) Entgegenhaltungen:
- EP-A2- 0 229 618
- DE-U1- 9 003 990
- DE-U1-202013 101 406
- US-A- 3 442 353

## Beschreibung

Die vorliegende Erfindung betrifft eine Scheibenbremse eines Nutzfahrzeugs gemäß dem Oberbegriff des Anspruchs 1.

Bei gattungsgemäßen Scheibenbremsen ist ein eine Bremsscheibe umgreifender Bremssattel in und entgegen einer Zuspannrichtung der Scheibenbremse verschiebbar an einem fahrzeugfesten Bremsträger gelagert. Bei einem Bremsvorgang wird dabei der Bremssattel relativ zur Bremsscheibe verschoben, wobei eine Reaktionskraft am Bremssattelrücken entsteht. Durch diese Reaktionskraft am Bremssattelrücken werden sowohl der zuspannseitige Bremsbelag als auch der auf der Rückseite der Bremsscheibe vorgesehene Bremsbelag gegen die Bremsscheibe gedrückt, die nach Überwindung eines zwischen Bremsscheibe und den Bremsbelägen vorhandenen Lüftspiels durch Reibung ein Bremsmoment erzeugen. Die Verschiebung des Bremssattels erfolgt dabei durch eine Zuspannvorrichtung, welche im Wesentlichen eine Kolbenstange eines pneumatisch oder elektromotorisch oder federbetätigten Bremszylinders (nicht gezeigt) sowie einen bewegbaren Drehhebel aufweist, dessen Kraft bei einem Zuspannvorgang über eine Brücke auf zwei Gewindestempel verteilt, welche den zuspannseitigen Bremsbelag an die Bremsscheibe drücken.

Der Bremssattel ist dabei relativ zum Bremsträger über Gleitführungen senkrecht zur Reibfläche der Bremsscheibe verschiebbar. Dazu sind zwei Gleitführungen vorgesehen, die jeweils einen am Bremsträger verschraubten Führungsholm umfassen, der sich mit Spiel in eine jeweilige Bohrung im Bremssattel erstreckt, wobei die Führungsholme und die diese aufnehmenden Bohrungen sich in Zuspannrichtung der Scheibenbremse erstrecken. In dieser Bohrung des Bremssattels ist jeweils ein Lager oder Gleitelement angeordnet, das eine reibungsarme Verschiebbarkeit des Bremssattels gegenüber dem Bremsträger ohne hohen Kraftverlust gewährleistet.

Eine der Gleitführungen ist dabei als Festlager mit geringem Gleitspiel ausgebildet, während das andere als Loslager, insbesondere zum Ausgleich von Fertigungstoleranzen, Wärmeausdehnung der Bauteil sowie Montagetoleranzen ausgebildet ist.

Allerdings ist die Herstellung einer Scheibenbremse mit einem derart ausgebildeten Festlager und Loslager zur Lagerung des Bremssattels an dem Bremsträger relativ kostenaufwendig, insbesondere aufgrund der exakt in den Bremssattel einzubringenden Bohrungen zur Aufnahme der Führungsholme.

Aus der DE 20 2013 101 406 U1 ist eine Scheibenbremse bekannt, bei der das Loslager in Gestalt eines Führungsabschnitts am Bremsträger, der in eine sich in Richtung der Drehachse der Bremsscheibe erstreckende Nut im Bremssattel eingreift, ausgebildet.

Aufgabe der vorliegenden Erfindung ist es, eine kostengünstiger herstellbare Scheibenbremse der gattungsgemäßen Art zu entwickeln, bei gleichzeitiger Beibehaltung des Fest- und Loslager-Lagerkonzeptes.

Diese Aufgabe wird durch eine Scheibenbremse mit den Merkmalen des Anspruchs 1 gelöst.

Die erfindungsgemäße Scheibenbremse eines Nutzfahrzeugs weist einen fahrzeugseitig ortsfesten, eine Bremsscheibe teilweise umgreifenden Bremsträger sowie einen an dem Bremsträger angeordneten und diesen teilweise übergreifenden Bremssattel auf. Der Bremssattel ist relativ zum Bremsträger über Gleitführungen senkrecht zu einer Reibfläche der Bremsscheibe verschiebbar. Dabei ist eine erste der Gleitführungen als Festlager und eine zweite der Gleitführungen als Loslager ausgebildet. Zumindest das Loslager ist erfindungsgemäß als Kulissenführung mit einer sich in Verschieberichtung des Bremssattels erstreckenden Gleitbahn und einem in der Gleitbahn ausgenommenen ersten Führungselement ausgebildet. Das erste Führungselement ist dabei sich parallel zur Reibfläche der Bremsscheibe erstreckend am Bremssattel und die Gleitbahn an einem Teilstück des Bremsträgers angeordnet.

Durch die Ausführung des Loslagers als Kulissenführung ist eine wesentliche Vereinfachung des Aufbaus des Loslagers erreicht. Die Funktion des Festlagers und des Loslagers der Bremssattellagerung wird dabei aufgeteilt, wobei die Führung des Bremssattels um die Zuspannbewegung sowie den Verschleißweg vom Festlager übernommen wird. Das Loslager übernimmt nun die Funktion der Rüttelstabilisierung sowie des Niederhaltens des Bremssattels, um ein Aufklappen oder Aufdrehen des Bremssattels um das Festlager zu verhindern. Ein solches vereinfachtes Loslager zeichnet sich insbesondere durch die kostengünstigere Herstellungsweise aus.

Dies ermöglicht die Nutzung einer Kulissenführung anstelle einer aus dem Stand der Technik bekannten Gleitbuchse zur Aufnahme eines Führungsholmes als Führungselement. Auch das Führungselement muss nicht, kann jedoch, als Holm ausgebildet sein. Auch eine Ausführung des ersten Führungselementes als Stift oder dergleichen mit einer als Gleitfläche dienenden Mantelfläche ist denkbar.

Vorteilhafte Ausführungsvarianten der Erfindung sind Gegenstand der Unteransprüche.

Nach einer Ausführungsvariante erstreckt sich das erste Führungselement senkrecht zur Richtung der Längserstreckung des Bremsträgers und parallel zur Reibfläche der Bremsscheibe.

Diese Ausführungsvariante zeichnet sich durch die einfache Montagemöglichkeit eines solchen Führungselementes, beispielsweise an einer dem Bremsträger zugewandten Unterseite des Bremssattels, bevorzugt durch Einschrauben in eine dazu vorgesehene Bohrung mit Innengewinde, aus.

Die Gleitbahn weist gemäß einer vorteilhaften Ausführungsvariante Gleitflächen auf, die als parallel zu einander ausgerichtete Innenflächen eines Langlochs ausgebildet sind, in dem das erste Führungselement in Verschieberichtung des Bremssattels verschiebbar ist.

Nach einer alternativen Ausführungsvariante weist die Gleitbahn Gleitflächen auf, die als parallel zueinander ausgerichtete Innenflächen einer in Gleitrichtung des ersten Führungselementes auf einer Seite offenen Langnut ausgebildet sind.

Das Einbringen eines solchen Langloches oder das Ausbilden einer Langnut am Bremsträger oder am Bremssattel ist insbesondere bei als Gussteilen ausgebildeten Bremsträgern oder Bremssätteln in einfacher und kostengünstiger Weise möglich.

Gemäß einer bevorzugten Ausführungsvariante der Erfindung ist an einer Stirnfläche des ersten Führungselementes ein die Gleitbahn hintergreifendes Kopfstück angeformt oder befestigt. Mit diesem Kopfstück wird ein Aufklappen oder Aufdrehen des Bremssattels und des Festlagers wirksam verhindert.

Nachfolgend werden bevorzugte Ausführungsbeispiel anhand der beiliegenden Zeichnungen näher erläutert. Es zeigen:
- Figur 1: ein Ausschnitt einer gattungsgemäßen Scheibenbremse eines Nutzfahrzeuges gemäß dem Stand der Technik,
- Figur 2: eine perspektivische Ansicht eines Bremsträgers und eines diesen übergreifenden Bremssattels einer Ausführungsvariante einer Scheibenbremse,
- Figur 3: eine perspektivische Ansicht eines Teilstücks eines Bremsträgers der in Figur 2 gezeigten Ausführungsvariante,
- Figur 4: eine perspektivische Ansicht eines Bremsträgers und eines diesen übergreifenden Bremssattels gemäß einer alternativen Ausführungsvariante einer erfindungsgemäßen Scheibenbremse,
- Figur 5: eine perspektivische Ansicht eines Ausschnitts der in Figur 4 gezeigten Bauteile der Scheibenbremse in einer Nichtbremsstellung und
- Figur 6: eine perspektivische Ansicht des in Figur 5 dargestellten Ausschnitts in einer Bremsstellung des Bremssattels.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsträgers, des Bremssattels, der Führungselemente, der Gleitbahn und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

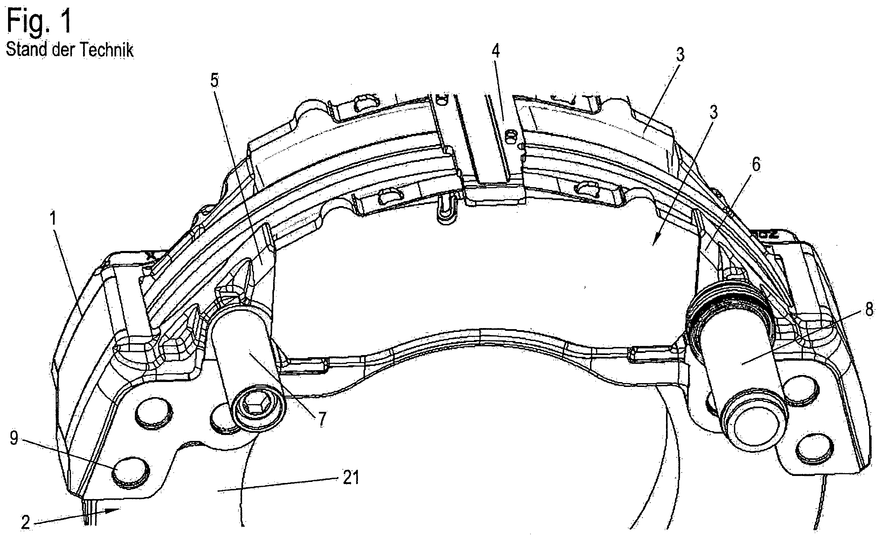

In der Figur 1 ist mit dem Bezugszeichen 1 ein Bremsträger einer gattungsgemäßen Scheibenbremse bezeichnet, wie er aus dem Stand der Technik bekannt ist. Dieser Bremsträger 1 ist dabei fahrzeugseitig ortsfest festgelegt, wozu Durchgangsbohrungen 9 für Verbindungsschrauben vorsehen sind, die an einem Fahrzeugachsteil eines Nutzfahrzeugs festschraubbar sind.

Der Bremsträger 1 ist dabei so angeordnet, dass er eine Bremsscheibe 2 teilweise umgreift. Beidseitig der Reibfläche der Bremsscheibe 2 ist der Bremsträger durch Trägerhörner 5, 6 und eine Brücke begrenzte Belagschächte zur Aufnahme eines jeweiligen Bremsbelages 3. Die Bremsbeläge 3 sind dabei vorzugsweise nach dem Einbau durch einen Belaghaltebügel 4 radial zur Drehachse der Bremsscheibe gesichert, wobei dieser Belaghaltebügel 4 üblicherweise an einem den Bremsträger 1 teilweise übergreifenden hier nicht gezeigten Bremssattel fixiert ist.

An einer Zuspannseite des Bremsträgers 1 sind desweiteren Führungsholme 7, 8 von Gleitführungen festgelegt. Dabei bildet einer der Führungsholme 7 einen Bestandteil eines Loslagers, während der Führungsholm 8 Bestandteil eines Festlagers ist, mit dem die Führung des Bremssattels um die Zuspannbewegung sowie den Verschleißweg erfolgt. Das Loslager dient dabei insbesondere zum Ausgleich von Fertigungs- und Montagetoleranzen in Umlaufrichtung der Bremsscheibe.

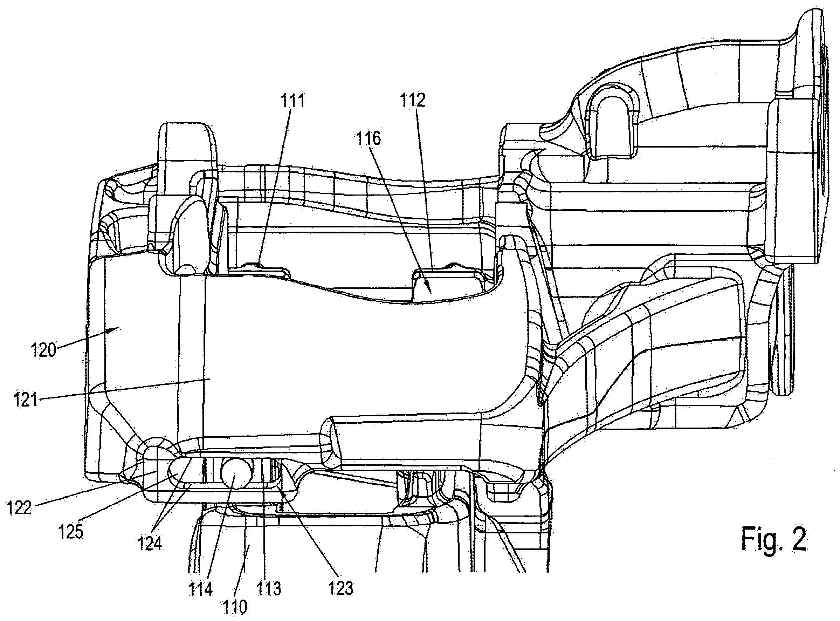

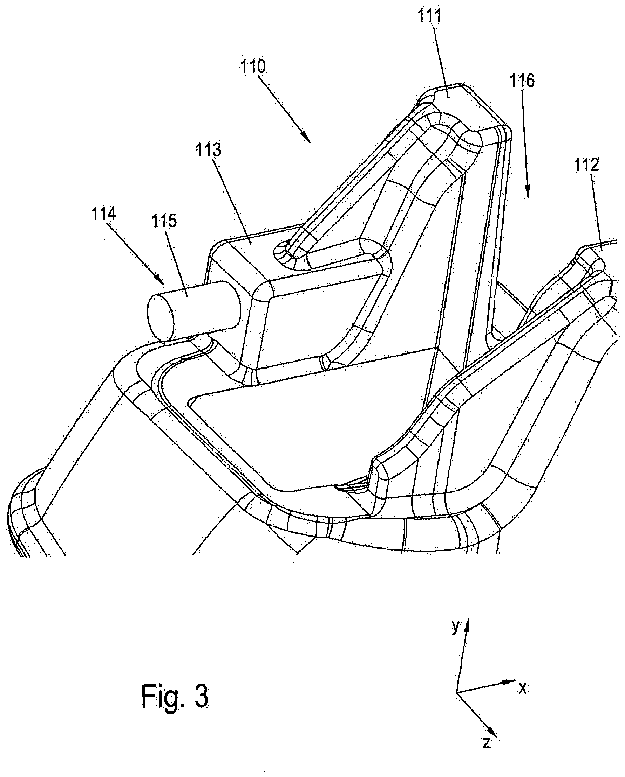

In den Figuren 2 und 3 ist eine erste Ausführungsvariante eines Teilbereiches einer Scheibenbremse eines Nutzfahrzeugs perspektivisch dargestellt. Der prinzipielle Aufbau der Scheibenbremse entspricht dabei dem Aufbau der anhand von Figur 1 erläuterten gattungsgemäßen Scheibenbremse.

Auch hier ist ein Bremsträger 110 fahrzeugseitig ortsfest festgelegt und umgreift eine (nicht dargestellte) Bremsscheibe. Der Bremsträger 110 ist mit einem diesen teilweise übergreifenden Bremssattel 120 verbunden. Auch hier ist der Bremssattel 120 relativ zum Bremsträger 110 über Gleitführungen senkrecht zu einer Reibfläche 21 der Bremsscheibe verschiebar. Dabei ist eine der Gleitführungen als Festlager und eine zweite der Gleitführungen als Loslager ausgebildet.

Das Loslager ist als Kulissenführung mit einer sich in Verschieberichtung des Bremssattels 120 erstreckenden Gleitbahn 123 und einem in der Gleitbahn 123 aufgenommen ersten Führungselement 114 ausgebildet.

In der in den Figuren 2 und 3 gezeigten Ausführungsvariante ist das erste Führungselement 114 am Bremsträger 110 angeordnet, vorzugsweise angeschraubt. Im Gegensatz zur aus dem Stand der Technik bekannten Bauweise erstreckt sich das erste Führungselement 114 parallel zur Reibfläche 21 der Bremsscheibe 2.

In der hier gezeigten Ausführungsvariante erstreckt sich das erste Führungselement 114 in Richtung X der Längserstreckung des Bremsträgers 110. Das Führungselement ist dabei, wie in Figur 3 gezeigt, vorzugsweise als Holm mit einer als Gleitfläche dienenden Mantelfläche 115 ausgebildet. Denkbar sind auch andere Gestaltungen des Führungselementes 114, beispielsweise als Stift oder Schraube.

Das Führungselement 114 erstreckt sich dabei von einem einer Innenfläche des Bremssattels 120 zugewandten Teilstück 113 des Bremsträgers 110. Dieses Teilstück 113 des Bremsträgers 110 ist hier an einer dem Belagschacht 116 abgewandten Außenseite eines reaktionsseitigen Bremsträgerhorns 111 angeformt, mit einer senkrecht zur Längserstreckung des Bremsträgers 110 geformten Montagefläche, aus der sich das erste Führungselement 114 erstreckt.

Die in Figur 2 gezeigte Gleitbahn 123 weist Gleitflächen 124 auf, die als parallel zueinander ausgerichtete Innenflächen eines Langlochs 125 ausgebildet sind. Das Langloch 125 ist dabei in ein Teilstück 122 des Bremssattels 120 eingebracht, wobei die Längserstreckung des Langlochs und der Gleitflächen 124 in Verschieberichtung des Bremssattels 120, das heißt in Zuspannrichtung des Bremssattels 120 ausgerichtet ist beziehungsweise sind.

Denkbar ist prinzipiell auch die Anordnung der Gleitbahn 123 und entsprechend des Teilstücks 113 des Bremsträgers 110 mit dem daran angeordneten ersten Führungselement 114 auf der Zuspannnseite des Bremsträgers 110 bzw. des Bremssattels 120.

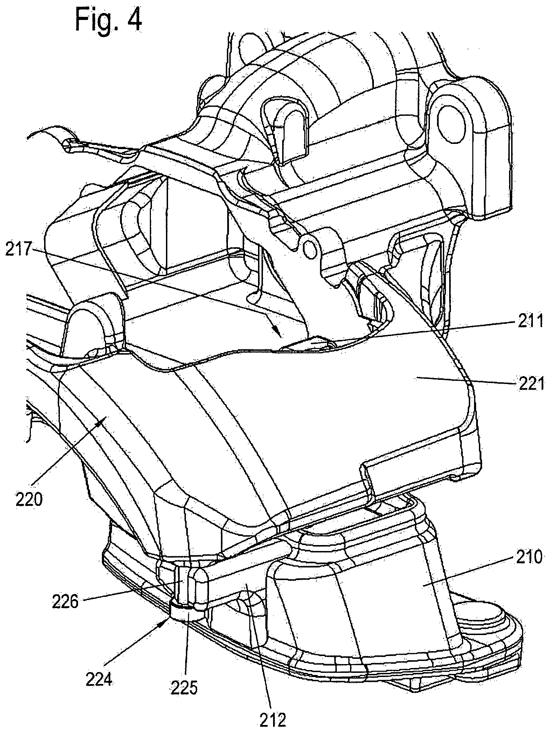

Anhand der Figuren 4 bis 6 wird im Folgenden eine Ausführungsvariante einer erfindungsgemäßen Scheibenbremse eines Nutzfahrzeugs erläutert.

Wie in Figur 4 gezeigt ist, entspricht auch hier der prinzipielle Aufbau der Scheibenbremse der gattungsgemäßen Scheibenbremse, wie sie anhand der Figur 1 beschrieben wurde.

Im Gegensatz zu der Ausführungsvariante gemäß Figur 2 und 3 ist bei dieser Ausführungsvariante an dem Bremsträger 210 eine Gleitbahn 213 an einem Teilstück 212 angeordnet.

Das erste Führungselement 224 dieser Ausführungsvariante ist am Bremssattel 220 angeordnet. Das erste Führungselement 224 erstreckt sich dabei parallel zur Reibfläche 21 der (hier nicht dargestellten) Bremsscheibe. Besonders bevorzugt erstreckt sich das erste Führungselement 224, wie in den Figuren 4 bis 6 zu erkennen ist, senkrecht zur Richtung der Längserstreckung der Bremsträgers und parallel zur Reibfläche der Bremsscheibe beziehungsweise senkrecht zur Drehachse der Bremsscheibe von einer Unterseite 222 des Bremssattels 220 nahe einer reaktionsseitigen Außenwand 223 des Bremssattels 220.

Bevorzugt ist das erste Führungselement 224 in eine mit einem Innengewinde versehene Bohrung (nicht gezeigt) an der Unterseite 222 des Bremssattels 220 eingeschraubt. Denkbar sind aber auch andere Befestigungsmöglichkeiten des ersten Führungselements 224 am Bremssattel 220, beispielsweise durch Verschweißen oder Verkleben. Auch eine einstückige Bauweise des ersten Führungselementes 224 mit dem Bremssattel 220 ist denkbar.

Das erste Führungselement 224 weist in dieser Ausführungsvariante ein die Gleitbahn 213 hintergreifendes Kopfstück 225 auf, das an einem vorzugsweise als Holm mit einer Mantelfläche 226 ausgebildeten Halsstück an dessen Stirnseite befestigt oder angeformt ist.

Wichtig für die Form des Kopfstückes 225 ist dabei, dass die Breite des Kopfstücks 225 größer ist als der Abstand der parallel zueinander ausgerichteten Gleitflächen 214 der an dem Bremsträger 210 angeordneten Gleitbahn 213, um in der Funktionsstellung ein Umklappen des Bremssattels 220 um das (nicht gezeigte) Festlager zu verhindern.

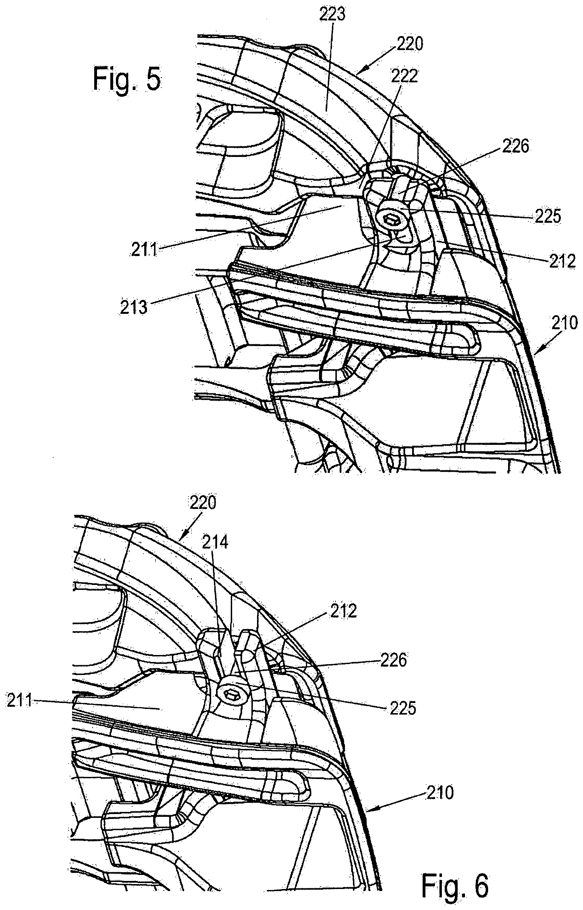

Wie in den Figuren 5 und 6 gezeigt ist, weist die Gleitbahn 213 Gleitflächen 214 auf, die als parallel zueinander ausgerichtete Innenflächen einer in Gleitrichtung des ersten Führungselementes 224, sprich in oder entgegen der Zuspannrichtung der Scheibenbremse, auf einer Seite offenen Langnut ausgebildet sind.

Das Teilstück 212 des Bremsträgers 210, an dem die Langnut angebracht ist, ist dabei vorzugsweise an eine reaktionsseitigen Bremsträgerhorn 211 auf einer dem Bremsbelagschacht 217 abgewandten Seite des Bremsträgerhorns 211 des Bremsträgers 210 angeordnet.

Denkbar ist prinzipiell auch die Anordnung der Langnut und entsprechend des Teilstücks 212 des Bremsträgers 210 mit dem daran angeordneten ersten Führungselement 224 auf der Zuspannnseite des Bremsträgers.

Das Teilstück 212, an dem die Gleitbahn 213 ausgebildet ist, ist vorzugsweise einstückig an dem Bremsträger 210 angeformt. Denkbar ist auch, das Teilstück 212 als separates Bauteil auszubilden und am Bremsträger 210 zu befestigen, beispielsweise zu verschrauben.

Figur 5 zeigt eine Relativposition des Bremssattels 220 zum Bremsträger 210 in einer Nichtbremsstellung, bei der das erste Führungselement 224 an einem ersten Ende der Gleitbahn 213 positioniert ist, während Figur 6 die Relativposition des Bremssattels 220 zum Bremsträger 210 in einer Bremsstellung zeigt, bei der der Bremssattel 220 zur Anlage der reaktionsseitigen Bremsbeläge in Richtung der Bremsscheibe verschoben wurde und bei der das erste Führungselement 224 nahe einem gegenüberliegenden zweiten Ende der Gleitbahn 213 positioniert ist.

Die Längserstreckung der Gleitbahn 123, 213 beider oben beschriebenen Ausführungsvarianten ist derart bemessen, dass eine hinreichende Verschiebung des Bremssattels 120, 220 auch bei verschlissenen Bremsbelägen noch ermöglicht ist.

### Bezugszeichenliste

- 1: Bremsträger

- 2: Bremsscheibe
- 21: Reibfläche

- 3: Bremsbelag
- 4: Belaghaltebügel
- 5: Trägerhorn
- 6: Trägerhorn
- 7: Führungsholm
- 8: Führungsholm
- 9: Durchgangsbohrung

- 110: Bremsträger
- 111: Bremsträgerhorn
- 112: Bremsträgerhorn
- 113: Teilstück
- 114: Führungselement
- 115: Mantelfläche
- 116: Belagschacht

- 120: Bremssattel
- 121: Sattelrücken
- 122: Teilstück
- 123: Gleitbahn
- 124: Gleitflächen
- 125: Langloch

- 210: Bremsträger
- 211: Bremsträgerhorn
- 212: Teilstück
- 213: Gleitbahn
- 214: Gleitfläche
- 217: Bremsbelagschacht

- 220: Bremssattel
- 221: Sattelrücken
- 222: Unterseite
- 223: Außenwand
- 224: Führungselement
- 225: Kopfstück
- 226: Mantelfäche

- X: Richtung

## Patentansprüche

1. Scheibenbremse eines Nutzfahrzeugs, aufweisend
- einen fahrzeugseitig ortsfesten, eine Bremsscheibe (2) teilweise umgreifenden Bremsträger (210) sowie
- einen an dem Bremsträger (210) angeordneten und diesen teilweise übergreifenden Bremssattel (220),
- wobei der Bremssattel (220) relativ zum Bremsträger (210) über Gleitführungen senkrecht zu einer Reibfläche (21) der Bremsscheibe (2) verschiebbar ist,
- wobei eine erste der Gleitführungen als Festlager und eine zweite der Gleitführungen als Loslager ausgebildet ist,
- wobei zumindest das Loslager als Kulissenführung mit einer sich in Verschieberichtung des Bremssattels (220) erstreckenden Gleitbahn (213) und einem in der Gleitbahn (213) aufgenommenen ersten Führungselement (214) ausgebildet ist,
**dadurch gekennzeichnet, dass**
- das erste Führungselement (224) sich parallel zur Reibfläche (21) der Bremsscheibe (2) erstreckend am Bremssattel (220) und die Gleitbahn (213) an einem Teilstück (212) des Bremsträgers (210) angeordnet ist.

2. Scheibenbremse nach Anspruch 1, **dadurch gekennzeichnet, dass** das erste Führungselement (224) sich senkrecht zur Richtung der Längserstreckung des Bremsträgers (110, 210) erstreckt.

3. Scheibenbremse nach einem der vorhergehenden Ansprüche, **dadurch gekennzeichnet, dass** die Gleitbahn (213) Gleitflächen (214) aufweist, die als parallel zueinander ausgerichtete Innenflächen einer in Gleitrichtung des ersten Führungselement (224) auf einer Seite offenen Langnut ausgebildet sind.

4. Scheibenbremse nach einem der vorhergehenden Ansprüche, **dadurch gekennzeichnet, dass** das erste Führungselement (224) als Holm oder Stift mit einer als Gleitfläche dienenden Mantelfläche (226) ausgebildet ist.

5. Scheibenbremse nach Anspruch 4, **dadurch gekennzeichnet, dass** an einer Stirnfläche des ersten Führungselementes (224) ein die Gleitbahn (213) hintergreifendes Kopfstück (225) angeformt oder befestigt ist.

6. Scheibenbremse nach einem der vorhergehenden Ansprüche , **dadurch gekennzeichnet, dass** das erste Führungselement (224) sich von einer dem Bremsträger (210) zugewandten Unterseite (222) des Bremssattels (220) erstreckt.

## Claims

1. A disc brake of a utility vehicle, having
- a brake carrier (210) that is stationary in relation to the vehicle and partially surrounds a brake disc (2) and
- a brake calliper (220) that is arranged on and partially surrounds the brake carrier (210),
- it being possible to move the brake calliper (220) relative to the brake carrier (210) perpendicular to a friction surface (21) of the brake disc (2) via sliding guides,
- a first sliding guide taking the form of a fixed bearing and a second sliding guide taking the form of a floating bearing,
- at least the floating bearing being designed as a slide guide having a slideway (213) that extends in the direction of movement of the brake calliper (220) and a first guide element (214) that is accommodated in the slideway (213)
**characterised in that**
- the first guide element (224) is arranged extending parallel to the friction surface (21) of the brake disc (2) on the brake calliper (22) and the slideway (213) is arranged on a part (212) of the brake carrier (210).

2. A disc brake according to claim 1, **characterised in that** the first guide element (224) extends perpendicular to the direction of the longitudinal extent of the brake carrier (110, 210).

3. A disc brake according to any one of the preceding claims, **characterised in that** the slideway (213) has sliding surfaces (214) that take the form of inner surfaces, aligned parallel to one another, of an elongated groove that is open on one side in the direction of sliding of the first guide element (224).

4. A disc brake according to any one of the preceding claims, **characterised in that** the first guide element (224) takes the form of a bar or pin having a lateral surface (226) that serves as a sliding surface.

5. A disc brake according to claim 4, **characterised in that** a head piece (225) that reaches behind the slideway (213) is integrally formed or mounted on an end face of the first guide element (224).

6. A disc brake according to any one of the preceding claims, **characterised in that** the first guide element (224) extends away from an underside (222) of the brake caliper (220) facing the brake carrier (210).

## Revendications

1. Frein à disque d'un véhicule utilitaire, comportant
- un support (210) de frein, fixe en position du côté du véhicule et enserrant en partie un disque (2) de frein, ainsi que
- un étrier (220) de frein, disposé sur le support (210) de frein et chevauchant celui-ci en partie,
- dans lequel l'étrier (220) de frein peut, par rapport au support (210) de frein, coulisser perpendiculairement à une surface (21) de friction du disque (2) de frein par des glissières,
- dans lequel une première des glissières est constitué en palier fixe et une deuxième des glissières en palier libre,
- dans lequel au moins le palier libre est constitué en guidage à coulisse ayant une piste (213) de glissement s'étendant dans la direction de coulissement de l'étrier (220) de frein et un premier élément (214) de guidage reçu dans la piste (213) de glissement,
**caractérisé en ce que**
- le premier élément (224) de guidage est monté sur l'étrier (220) de frein en s'étendant parallèlement à la surface (21) de friction du disque (2) de frein et la piste (213) de glissement sur une pièce (212) partielle du support (210) de frein.

2. Frein à disque suivant la revendication 1, **caractérisé en ce que** le premier élément (224) de guidage s'étend perpendiculairement à la direction de l'étendue longitudinale du support (110, 210) de frein.

3. Frein à disque suivant l'une des revendications précédentes, **caractérisé en ce que** la piste (213) de glissement a des surfaces (214) de glissement, qui sont constituées sous la forme de surfaces intérieures, dirigées parallèlement l'une à l'autre, d'une rainure longitudinale ouverte d'un côté dans la direction de glissement du premier élément (224) de guidage.

4. Frein à disque suivant l'une des revendications précédentes, **caractérisé en ce que** le premier élément (224) de guidage est constitué en longeron ou en broche ayant une surface (226) latérale servant de surface de glissement.

5. Frein à disque suivant la revendication 4, **caractérisé en ce qu'**il est formé ou fixé, sur une surface frontale du premier élément (224) de guidage, une pièce (225) de tête pénétrant derrière la piste (213) de glissement.

6. Frein à disque suivant l'une des revendications précédentes, **caractérisé en ce que** le premier élément (224) de guidage s'étend à partir d'un côté (222) inférieur, tourné vers le support (210) de frein, de l'étrier (220) de frein.
